# EUROPEAN PATENT APPLICATION

(11) **EP 3 618 026 A1**
(43) Date of publication of application: **04.03.2020**
(21) Application number: 19194598.9
(22) Date of filing: 30.08.2019
(51) Int. Cl.: G08G 1/01, G05D 1/02, G06K 9/00, G07C 5/00, G08G 1/04, G08G 1/0967, H04W 4/00, H04W 84/00

(54) **ROADSIDE SENSING SYSTEM BASED ON VEHICLE INFRASTRUCTURE COOPERATION, AND METHOD FOR CONTROLLING VEHICLE THEREOF**

(30) Priority: 31.08.2018 CN 201811015661
(71) Applicant: Baidu Online Network Technology (Beijing) Co., Ltd., Beijing 100085 (CN)
(72) Inventor: HU, Xing, Beijing, 100085 (CN); XIA, Tian, Beijing, 100085 (CN); LI, Chongchong, Beijing, 100085 (CN); TAN, Cheng, Beijing, 100085 (CN); TAO, Sheng, Beijing, 100085 (CN); CAO, Huo, Beijing, 100085 (CN); SHI, Yifeng, Beijing, 100085 (CN); FANG, Lei, Beijing, 100085 (CN); WANG, Haisong, Beijing, 100085 (CN); TAO, Ji, Beijing, 100085 (CN)
(74) Representative: Papa, Elisabetta

(57) **Abstract**

The present disclosure provides a roadside sensing system based on vehicle infrastructure cooperation and a method for controlling a vehicle thereof. The system includes a target vehicle and an intelligent roadside device provided on a road segment divided by a preset distance. The intelligent roadside device comprises a roadside sensing module, a roadside processing module, and a roadside communication module. The roadside sensing module comprises a sensor configured to acquire surrounding environment information of the target vehicle. The roadside processing module is configured to perform fusion processing on the surrounding environment information acquired to form road environment information. The roadside communication module is configured to send the road environment information to the target vehicle. The target vehicle comprises a driving behavior decision module, which is configured to perform path planning according to the road environment information, and to perform autonomous driving according to a result of the path planning.

## Description

### FIELD

The present disclosure relates to the field of transportation technology, and more particularly, to a roadside sensing system based on vehicle infrastructure cooperation and a method for controlling a vehicle thereof.

### BACKGROUND

As an advanced technology in the field of intelligent transportation, automatic driving technology includes environment perception, motion planning, decision making, and motion control. At present, with the development of artificial intelligence and deep-learning processing chips, automatic driving technologies have developed rapidly.

However, in order to fully perceive the surrounding environment, each automatic driving vehicle needs to be equipped with various complex and expensive sensor devices, resulting in high costs of the vehicle. Therefore, it is an urgent problem to reduce the cost of intelligent transportation system.

### SUMMARY

Embodiments of a first aspect of the present disclosure provide a roadside sensing system based on vehicle infrastructure cooperation. The roadside sensing system includes a target vehicle and an intelligent roadside device provided on a road segment divided by a preset distance. The intelligent roadside device includes a roadside sensing module, a roadside processing module, and a roadside communication module. The roadside sensing module includes a sensor configured to acquire surrounding environment information of the target vehicle. The roadside processing module is configured to perform fusion processing on the surrounding environment information acquired to form road environment information. The roadside communication module is configured to send the road environment information to the target vehicle. The target vehicle includes a driving behavior decision module. The driving behavior decision module is configured to perform path planning according to the road environment information, and to perform autonomous driving according to a result of the path planning.

With the roadside sensing system based on vehicle infrastructure cooperation according to embodiments of the present disclosure, road environment information around the target vehicle is acquired by the intelligent roadside device, and sent to the target vehicle, such that the target vehicle performs autonomous driving according to the road environment information. Thus, the vehicle on the road can realize autonomous driving by interacting with the intelligent roadside device, the overall cost of configuring the sensing system on the vehicle can be effectively reduced, and the cost of the intelligent transportation system can be reduced.

Embodiments of a second aspect of the present disclosure provide a method for controlling a vehicle performed by a roadside sensing system based on vehicle infrastructure cooperation. The method includes: acquiring surrounding environment information of a target vehicle; performing fusion processing on the surrounding environment information acquired to form road environment information; and sending the road environment information to the target vehicle, to make the target vehicle performs path planning according to the road environment information and perform autonomous driving according to a result of the path planning.

With the method for controlling a vehicle performed by the roadside sensing system based on vehicle infrastructure cooperation according to embodiments of the present disclosure, road environment information around the target vehicle is acquired by the intelligent roadside device, and sent to the target vehicle, such that the target vehicle performs autonomous driving according to the road environment information. Thus, the vehicle on the road can realize autonomous driving by interacting with the intelligent roadside device, the overall cost of configuring the sensing system on the vehicle can be effectively reduced, and the cost of the intelligent transportation system can be reduced.

Embodiments of a third aspect of the present disclosure provide a non-transitory computer readable storage medium having stored thereon a computer program that, when executed by a processor, causes a method for controlling a vehicle performed by a roadside sensing system based on vehicle infrastructure cooperation described in the above embodiments to be implemented.

Embodiments of a fourth aspect of the present disclosure provide a computer program product having stored thereon an instruction that, when executed by a processor, causes a method for controlling a vehicle performed by a roadside sensing system based on vehicle infrastructure cooperation described in the above embodiments to be implemented.

Additional aspects and advantages of the present disclosure will be given in the following description, some of which will become apparent from the following description or be learned from practices of the present disclosure.

### BRIEF DESCRIPTION OF THE DRAWINGS

Fig. 1 is a schematic diagram of a roadside sensing system based on vehicle infrastructure cooperation according to an embodiment of the present disclosure.
Fig. 2 is a schematic diagram of a roadside sensing system based on vehicle infrastructure cooperation according to another embodiment of the present disclosure.
Fig. 3 is a schematic diagram of a roadside sensing system based on vehicle infrastructure cooperation according to yet another embodiment of the present disclosure.
Fig. 4 is a schematic diagram of a roadside sensing system based on vehicle infrastructure cooperation according to still yet another embodiment of the present disclosure.
Fig. 5 is a flow chart of a method for controlling a vehicle performed by a roadside sensing system based on vehicle infrastructure cooperation according to an embodiment of the present disclosure.
Fig. 6 is a flow chart of a method for controlling a vehicle performed by a roadside sensing system based on vehicle infrastructure cooperation according to another embodiment of the present disclosure.
Fig. 7 is a flow chart of a method for controlling a vehicle performed by a roadside sensing system based on vehicle infrastructure cooperation according to yet another embodiment of the present disclosure.

### Reference numerals:

target vehicle 1, intelligent roadside device 2, autonomous vehicle 3, driving behavior decision module 10, roadside sensing module 20, roadside processing module 30, roadside communication module 40, camera 210, radar 220, first radar 221, second radar 222, and meteorological sensor 230.

### DETAILED DESCRIPTION

Embodiments of the present disclosure will be described in detail in the following descriptions, examples of which are shown in the accompanying drawings, in which the same or similar elements and elements having same or similar functions are denoted by like reference numerals throughout the descriptions. The embodiments described herein with reference to the accompanying drawings are exemplary, which are used to explain the present disclosure, and shall not be construed to limit the present disclosure.

A roadside sensing system based on vehicle infrastructure cooperation and a method for controlling a vehicle performed by a roadside sensing system based on vehicle infrastructure cooperation according to embodiments of the present disclosure are described with reference to the drawings.

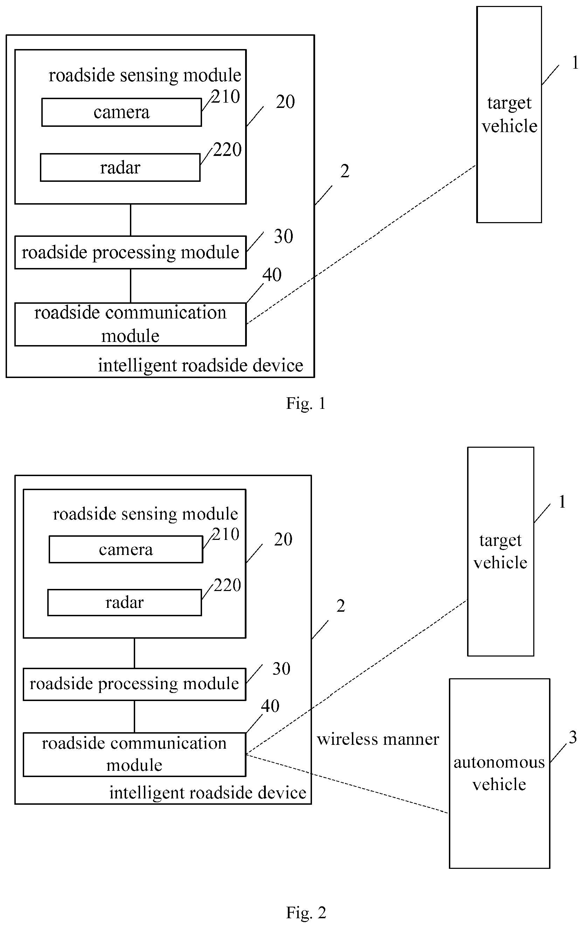

Fig. 1 is a schematic diagram of a roadside sensing system based on vehicle infrastructure cooperation according to an embodiment of the present disclosure.

As shown in Fig. 1, the roadside sensing system includes a target vehicle 1 and an intelligent roadside device 2 provided on a road segment divided by a preset distance.

The intelligent roadside device 2 includes a roadside sensing module 20, a roadside processing module 30 and a roadside communication module 40.

The roadside sensing module 20 includes a sensor configured to acquire surrounding environment information of the target vehicle 1.

It should be noted that, the sensor may be configured to acquiring surrounding environment information of the target vehicle, and may include, but is not limited to, a camera, a radar, etc.

Certainly, the roadside sensing module 20 may include other types of sensors in addition to the sensor related to acquiring surrounding environment information. For example, the roadside sensing module 20 may include a meteorological sensor, a photoelectric sensor, and the like.

It should be noted that, Fig. 1 illustrates an example in which the roadside sensing module 20 includes two sensors, a camera 210 and a radar 220.

It should be understood that, the type and the corresponding number of sensors in the roadside sensing module 20 may be set according to actual application requirements, which is not limited in the embodiment.

Specifically, the roadside sensing module 20 may acquire surrounding environment information of the target vehicle through the camera 210 and the radar 220, and sends the surrounding environment information acquired to the roadside processing module 230. The surrounding environment information of the target vehicle 1 may include, but is not limited to, the vehicle condition around the target vehicle 1, the obstacle condition, the position relationship of the target vehicle 1 and the road, and road condition information (e.g., congestion condition, lane occupancy condition, etc.) of the road where the target vehicle 1 is located, etc.

The roadside processing module 30 is configured to perform fusion processing on the surrounding environment information acquired to form road environment information.

The road environment information may include, but is not limited to, the position relationship of the target vehicle 1 and the road, the distance between vehicles, the road area and obstacle condition, road condition information, and path planning information of other vehicles.

It should be understood that, the road environment information may further include other information required for autonomous driving of the target vehicle 1, the position relationship of the target vehicle 1 and the road, the distance between vehicles, the road area and obstacle condition, the road condition information, and the path planning information of other vehicles are merely illustrative, and the road environment information is not limited thereto.

The roadside communication module 40 is configured to send the road environment information to the target vehicle 1.

The target vehicle 1 includes a driving behavior decision module 10. The driving behavior decision module 10 is configured to perform path planning according to the road environment information, and to perform autonomous driving according to a result of the path planning.

It should be noted that, in the embodiment, the target vehicle 1 does not having a sensing system.

In the embodiment, the intelligent roadside device with the sensing system acquires the road environment information of the target vehicle, and sends the road environment information to the target vehicle, such that the target vehicle performs autonomous driving according to the road environment information sent by the intelligent roadside device, compared with the related art, it is not required to provide an expensive sensing system for each vehicle, and the autonomous driving of common vehicle (e.g., the vehicle does not have the sensing system) can be realized by interacting with the intelligent roadside device 2, thereby effectively reducing the cost of the intelligent transportation system.

With the roadside sensing system based on vehicle infrastructure cooperation according to embodiments of the present disclosure, road environment information around the target vehicle is acquired by the intelligent roadside device, and sent to the target vehicle, such that the target vehicle performs autonomous driving according to the road environment information. Thus, the vehicle on the road can realize autonomous driving by interacting with the intelligent roadside device, the overall cost of configuring the sensing system on the vehicle can be effectively reduced, and the cost of the intelligent transportation system can be reduced.

On the basis of the above embodiment, in order to provide more comprehensive road environment information to the target vehicle 1, as shown in Fig. 2, on the basis of Fig. 1, the system further includes an autonomous vehicle 3.

The autonomous vehicle 3 is configured to sense surrounding environment information of the target vehicle 1, and send the surrounding environment information sensed to the intelligent roadside device 2.

The roadside processing module 30 is configured to perform fusion processing on the road environment information according to the surrounding environment information sensed by the autonomous vehicle 3.

In the embodiment, the intelligent roadside device acquires the surrounding environment information of the target vehicle sensed by the autonomous vehicle by interacting with the autonomous vehicle, and performs fusion processing on its sensed surrounding environment information and surrounding environment information received to acquire comprehensive road environment information around the target vehicle, and then sends the fused road environment information to the target vehicle through the roadside communication module, so that the target vehicle performs autonomous driving according to the road environment information received. Thus, the target vehicle can be provided with more comprehensive road environment information, and the security level of the autonomous driving of the target vehicle can be improved.

In at least one embodiment, since the autonomous vehicle has a short sensing range and easy to be occluded, and its vehicle-mounted camera is susceptible to the high beam of the opposite vehicle, in order to make the autonomous vehicle fully sense the surrounding environment and improve the driving safety, the autonomous vehicle may acquire the road environment information sensed by the intelligent roadside device 2, and fuse the sensed surrounding environment information and the received road environment information, and decide the autonomous driving behavior according to the fused surrounding environment information, thereby improving the safety of the autonomous vehicle.

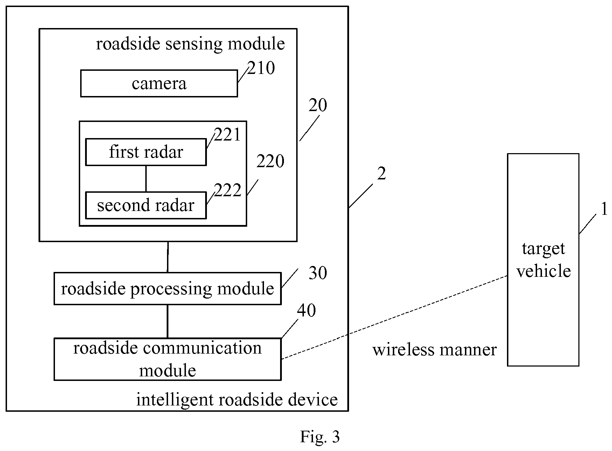

In an embodiment, the sensor includes a radar. To acquire the surrounding environment information of the target vehicle 1 more accurately, on the basis of Fig. 1, as shown in Fig. 3, the radar 220 may include a first radar 221 and a second radar 222.

The first radar 221 is configured to detect surrounding environment information in its coverage area.

The second radar 222 is configured to detect surrounding environment information in its coverage area.

A detection distance of the first radar 221 is greater than a detection distance of the second radar 222.

The roadside processing module 30 is configured to determine obstacle information near and far away from the target vehicle 1 according to the surrounding environment information detected by the first radar 221, the surrounding environment information detected by the second radar 222 and image information captured by the camera 210.

Specifically, the roadside sensing module 20 fuse the surrounding environment information detected by the first radar 221 and the second radar 222, so as to make the acquired surrounding environment information of the target vehicle more accurate.

In the embodiment, by fusing the surrounding environment information acquired by the first radar 221 and the second radar 222, a blind area caused by acquiring the surrounding environment information with a single radar can be avoided, thereby improving the accuracy of the surrounding environment information of the target vehicle, and increasing the safety of autonomous driving of the target vehicle.

In the embodiment, by accurately acquiring the surrounding environment information in the distant and nearby by the first radar and the second radar, the roadside processing module can determine obstacle information near and far away from the target vehicle according to the surrounding information acquired by the first radar and the second radar.

It should be noted that, the type of the first radar and the second radar may be set according to actual application requirements, to improve the capability of detecting obstacles. Examples are illustrated as follows.

In an embodiment, the first radar 221 and the second radar 222 are both a laser radar.

The first radar 221 is a 64-layer laser radar, and the second radar 222 is a 16-layer laser radar.

It should be noted that, to accurately acquire the surrounding environment information, as an example, the intelligent roadside device 2 may be provided with a 64-layer laser radar and a plurality of 16-layer laser radars (for example, four 16-layer laser radars).

In an embodiment, the first radar 221 is a laser radar 220, and the second radar 222 is a millimeter-wave radar.

In an embodiment, the first radar 221 is a laser radar, and the second radar 222 is a microwave radar.

It should be noted that, positions of the first radar 221, the second radar 222 and the camera 210 may be arranged according to actual application requirements. In an implementation, the first radar 221 may be arranged above the camera 210, and the second radar 222 may be arranged below the camera 210.

It should be noted that, structure of the first radar 221 and the second radar 222 of the system embodiment shown in Fig. 3 may also be included in the system embodiment shown in Fig. 2, which is not limited.

Specifically, one or more cameras 210 may be arranged according to actual application requirements. In an embodiment, a plurality of cameras 210 may be provided, and each of the plurality of cameras 210 corresponds to an intersection monitored by the intelligent roadside device 2. By arranging a plurality of cameras 210 with different positions and orientations to acquire image information, accuracy and reliability of the point cloud image can be improved.

In order to reduce the interference caused by components such as the sensor and the radar on the camera 210, in an embodiment, the camera 210 may be wrapped by a shielding layer, such that the interference caused by the radar 220 to the camera 210 can be eliminated, the imaging definition of the camera 210 can be increased, and the reliability of the intelligent roadside device can be improved.

In an implementation, the camera 210 may be wrapped by the shielding layer except for the lens and the heat dissipation portion. Thus, the interference caused by the components such as the radar 220 on the camera 210 can be eliminated, the imaging definition of the camera 210 can be increased, and the reliability of the intelligent roadside device can be improved.

In an embodiment, a plurality of cameras 210 are provided, each of which corresponds to an intersection monitored by the intelligent roadside device 2.

The camera 210 is configured to acquire traffic light image information of the intersection.

The roadside processing module 30 is further configured to acquire traffic light information of the intersection according to the traffic light image information.

The roadside communication module 40 is further configured to send the traffic light information to the target vehicle 1.

In an embodiment, the roadside processing module in the intelligent roadside device acquires traffic light image information of the intersection through the camera, analyzes the traffic light image information, and sends traffic light image information of the intersection to the target vehicle, such that the target vehicle can determine the driving behavior in accordance with traffic rules based on the traffic light information.

For example, in order to make the target vehicle determine the driving behavior in accordance with the traffic rules, the target vehicle 1 may be provided with a camera. The target vehicle 1 can acquire traffic light information of the front intersection through the camera, and determine the driving behavior in accordance with the traffic rules based on the traffic light information.

In an embodiment, the roadside processing module 30 is further configured to acquire traffic light information from a traffic light device. The traffic light device is located at the intersection that the target vehicle 1 is about to pass.

The roadside communication module 40 is further configured to send the traffic light information to the target vehicle 1.

In the embodiment, the intelligent roadside device directly communicates with the traffic light device to acquire the traffic light information of the traffic light device, and sends the traffic light information to the target vehicle through the roadside communication module, such that the target vehicle can determine the driving behavior in accordance with the traffic rules based on the traffic light information, the driving safety of the target vehicle can be improved.

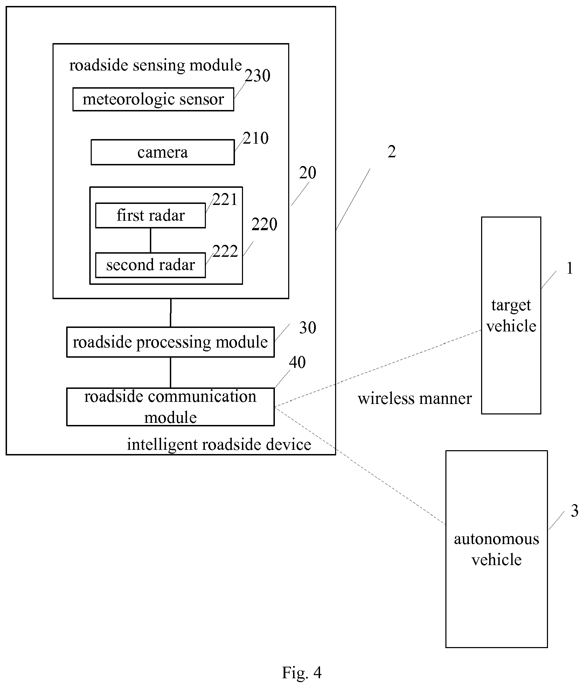

In an implementation, in order to facilitate the target vehicle 1 to acquire meteorological data and adjust the driving behavior according to the meteorological data, on the basis of Fig. 1, as shown in Fig. 4, the roadside sensing module 20 includes a meteorological sensor 230.

The meteorological sensor 230 is configured to detect meteorological data, and send the meteorological data to the roadside processing module 30.

The roadside processing module 30 is configured to send the meteorological data to the target vehicle 1 through the roadside communication module 40.

In the embodiment, the meteorological data of the area where the target vehicle is located is acquired by the meteorological sensor in the intelligent roadside device, and is sent to the target vehicle through the roadside communication module, such that the target vehicle can determine the autonomous driving behavior according to the meteorological data and the road environment information.

In an embodiment, the system may further include a meteorological center system (not shown). The roadside processing module 30 may also acquire meteorological data of the area where the intelligent roadside device 2 is located from the meteorological center system through the roadside communication module 40, and forwards the meteorological data to the target vehicle 1 through the roadside communication module 40. Thus, the target vehicle may determine the autonomous driving behavior according to the meteorological data and the road environment information.

The present disclosure further provides a method for controlling a vehicle performed by the roadside sensing system based on vehicle infrastructure cooperation according to the above embodiments, in which, for the roadside sensing system, reference may be made to relevant descriptions in the above embodiments, and details are not described herein again.

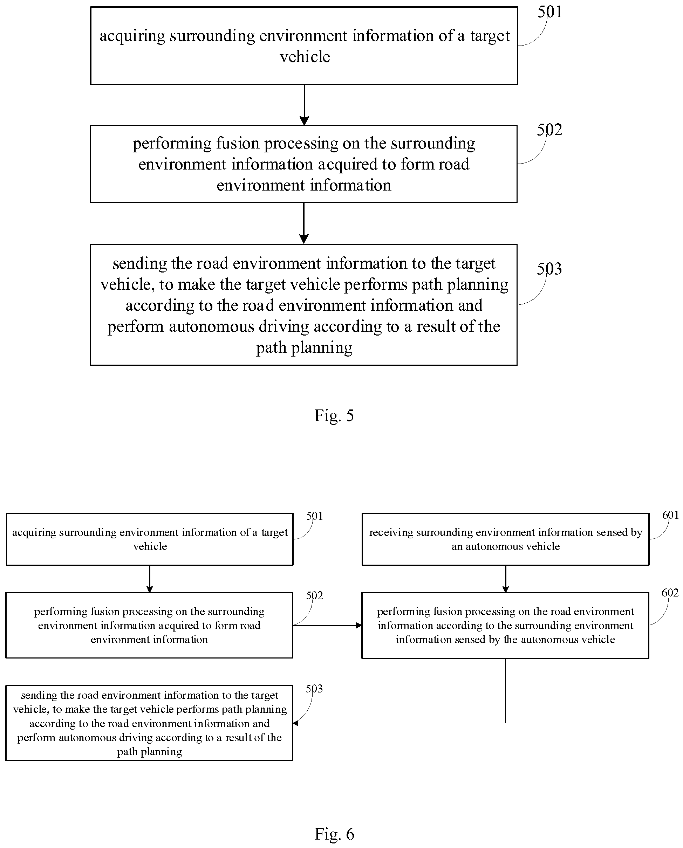

Fig. 5 is a flow chart of a method for controlling a vehicle performed by a roadside sensing system based on vehicle infrastructure cooperation according to an embodiment of the present disclosure. As shown in Fig. 5, the method may include the followings.

At block 501, surrounding environment information of a target vehicle is acquired.

At block 502, fusion processing is performed on the surrounding environment information acquired to form road environment information.

At block 503, the road environment information is sent to the target vehicle, to make the target vehicle performs path planning according to the road environment information and perform autonomous driving according to a result of the path planning.

With the method for controlling a vehicle performed by the roadside sensing system based on vehicle infrastructure cooperation according to embodiments of the present disclosure, road environment information around the target vehicle is acquired by the intelligent roadside device, and sent to the target vehicle, such that the target vehicle performs autonomous driving according to the road environment information. Thus, the vehicle on the road can realize autonomous driving by interacting with the intelligent roadside device, the overall cost of configuring the sensing system on the vehicle can be effectively reduced, and the cost of the intelligent transportation system can be reduced.

To provide the target vehicle with more accurate road environment information, and improve the driving safety of the target vehicle, before the road environment information is sent to the target vehicle, on the basis of Fig. 5, as shown in Fig. 6, the method further includes the followings.

At block 601, surrounding environment information sensed by an autonomous vehicle is received.

At block 602, fusion processing is performed on the road environment information according to the surrounding environment information sensed by the autonomous vehicle.

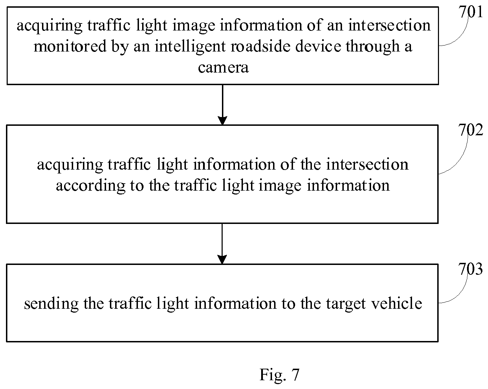

On the basis of the above embodiments, to further improve the driving safety of the target vehicle, in an embodiment of the present disclosure, as shown in Fig. 7, the method may further include the followings.

At block 701, traffic light image information of an intersection monitored by an intelligent roadside device is acquired through a camera.

At block 702, traffic light information of the intersection is acquired according to the traffic light image information.

At block 703, the traffic light information is sent to the target vehicle.

In the embodiment, the intelligent roadside device acquires traffic light image information through the camera, determines traffic light information according to the traffic light image information, and sends the traffic light information to the target vehicle. Thus, the target vehicle can determine the driving behavior in accordance with traffic rules based on the traffic light information, the driving safety of the target vehicle can be improved.

In an embodiment, the method may further include: acquiring traffic light information from a traffic light device, and forwarding the traffic light information to the target vehicle.

In the embodiment, the intelligent roadside device directly communicates with the traffic light device to acquire the traffic light information of the traffic light device, and sends the traffic light information to the target vehicle through the roadside communication module, such that the target vehicle can determine the driving behavior in accordance with the traffic rules based on the traffic light information, the driving safety of the target vehicle can be improved.

In an embodiment, in order to further improve the driving safety of the target vehicle, and facilitate the user of the target vehicle to obtain the meteorological data, the method further includes: detecting meteorological data and sending the meteorological data to the target vehicle.

In the embodiment, the meteorological data of the area where the target vehicle is located is acquired by the meteorological sensor in the intelligent roadside device, and is sent to the target vehicle through the roadside communication module, such that the target vehicle can determine the autonomous driving behavior according to the meteorological data and the road environment information.

In an embodiment, in order to further improve the driving safety of the target vehicle, the method may further include: receiving meteorological data of an area where the intelligent roadside device 2 is located sent by a meteorological center system, and forwarding the meteorological data to the target vehicle 1 through the roadside communication module.

Thus, the target vehicle can determine the autonomous driving behavior according to the meteorological data and the road environment information, thereby improving the driving safety of the target vehicle.

To implement the above embodiments, the present disclosure further provides a non-transitory computer readable storage medium having stored thereon a computer program that, when executed by a processor, causes a method for controlling a vehicle performed by a roadside sensing system based on vehicle infrastructure cooperation described in the above embodiments to be implemented.

To implement the above embodiments, the present disclosure further provides a computer program product having stored thereon an instruction that, when executed by a processor, causes a method for controlling a vehicle performed by a roadside sensing system based on vehicle infrastructure cooperation described in the above embodiments to be implemented.

In the description of the present disclosure, it is to be understood that, terms such as "central," "longitudinal," "lateral," "length," "width," "thickness," "upper," "lower," "front," "rear," "left," "right," "vertical," "horizontal," "top," "bottom," "inner," "outer," "clockwise,", "counterclockwise," "axial,", "radial,", and " circumferential" should be construed to refer to the orientation as then described or as shown in the drawings under discussion. These relative terms are for convenience of description and do not require that the present invention be constructed or operated in a particular orientation, and thus should not be construed as limiting the present disclosure.

In addition, terms such as "first" and "second" are used herein for purposes of description and are not intended to indicate or imply relative importance or significance or to imply the number of indicated technical features. Thus, the feature defined with "first" and "second" may comprise at least one feature. In the description of the present disclosure, "a plurality of' means at least two, for example, two or three, unless specified otherwise.

In the present disclosure, unless specified or limited otherwise, the terms "mounted", "connected", "coupled" and "fixed" should be understood in a broad sense. For example, it may be a fixed connection, a detachable connection, or an integral connection; it may be a mechanical connection or an electrical connection; it may also be a direct connection or an indirect connection via an intermediary, or it may be also be inner connection of two elements or an interaction between two elements. For those skilled in the art, the meaning of the above terms in the present disclosure can be understood according to specific situations.

In the present disclosure, unless otherwise expressly specified and limited, a structure in which a first feature is "on" or "below" a second feature may include that the first feature is in direct contact with the second feature, or in indirect contact with the second feature through an intermediate medium. Furthermore, a first feature "on," "above," or "on top of' a second feature may include that the first feature is right or obliquely "on," or "above," the second feature, or just means that the first feature is at a height higher than that of the second feature; while a first feature "below," "under," or "on bottom of' a second feature may include that the first feature is right or obliquely "below," or "under," the second feature, or just means that the first feature is at a height lower than that of the second feature.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although embodiments of present disclosure have been shown and described above, it should be understood that above embodiments are just explanatory, and cannot be construed to limit the present disclosure.

## Claims

1. A roadside sensing system based on vehicle infrastructure cooperation, comprising a target vehicle (1) and an intelligent roadside device (2) provided on a road segment divided by a preset distance, wherein,
the intelligent roadside device (2) comprises a roadside sensing module (20), a roadside processing module (30), and a roadside communication module (40);
the roadside sensing module (20) comprises a sensor configured to acquire surrounding environment information of the target vehicle (1);
the roadside processing module (30) is configured to perform fusion processing on the surrounding environment information acquired to form road environment information;
the roadside communication module (40) is configured to send the road environment information to the target vehicle (1);
the target vehicle (1) comprises a driving behavior decision module (10);
the driving behavior decision module (10) is configured to perform path planning according to the road environment information, and to perform autonomous driving according to a result of the path planning.

2. The roadside sensing system according to claim 1, further comprising:
an autonomous vehicle (3), configured to sense surrounding environment information of the target vehicle (1), and send the surrounding environment information sensed to the intelligent roadside device (2);
wherein the roadside processing module (30) is configured to perform fusion processing on the road environment information according to the surrounding environment information sensed by the autonomous vehicle (3).

3. The roadside sensing system according to claim 1, wherein the sensor comprises:
a first radar (221), configured detect surrounding environment information in its coverage area; and
a second radar (222), configured to detect surrounding environment information in its coverage area,
wherein a detection distance of the first radar (221) is greater than a detection distance of the second radar (222).

4. The roadside sensing system according to claim 3, wherein the first radar (221) and the second radar (222) are both a laser radar.

5. The roadside sensing system according to claim 3, wherein the first radar (221) is a laser radar, and the second radar (222) is a millimeter-wave radar.

6. The roadside sensing system according to claim 1, wherein the sensor comprises a plurality of cameras (210), and each of which corresponds to an intersection monitored by the intelligent roadside device (2),
the camera (210) is configured to acquire traffic light image information of the intersection;
the roadside processing module (30) is configured to acquire traffic light information of the intersection according to the traffic light image information;
the roadside communication module (40) is configured to send the traffic light information to the target vehicle (1).

7. The roadside sensing system according to claim 3, wherein the first radar (221) is arranged above the camera (210), and the second radar (222) is arranged below the camera (210).

8. The roadside sensing system according to claim 1, wherein,
the roadside processing module (30) is further configured to acquire traffic light information from a traffic light device; and
the roadside communication module (40) is further configured to send the traffic light information to the target vehicle (1).

9. The roadside sensing system according to claim 1, wherein the sensor comprises:
a meteorological sensor (230), configured to detect meteorological data, and send the meteorological data to the roadside processing module (30);
wherein the roadside processing module (30) is configured to send the meteorological data to the target vehicle (1) through the roadside communication module (40).

10. A method for controlling a vehicle performed by the roadside sensing system based on vehicle infrastructure cooperation according to any one of claims 1 to 9, wherein the method comprises:
acquiring (501) surrounding environment information of a target vehicle (1);
performing (502) fusion processing on the surrounding environment information acquired to form road environment information; and
sending (503) the road environment information to the target vehicle (1), to make the target vehicle (1) performs path planning according to the road environment information and perform autonomous driving according to a result of the path planning.

11. The method according to claim 10, before sending the road environment information to the target vehicle (1), the method further comprises:
receiving (601) surrounding environment information sensed by an autonomous vehicle (3); and
performing (602) fusion processing on the road environment information according to the surrounding environment information sensed by the autonomous vehicle (3).

12. The method according to claim 10, further comprising:
acquiring (701) traffic light image information of an intersection monitored by an intelligent roadside device (2) through a camera (210);
acquiring (702) traffic light information of the intersection according to the traffic light image information; and
sending (703) the traffic light information to the target vehicle (1).

13. The method according to claim 10, further comprising:
detecting meteorological data; and
sending the meteorological data to the target vehicle (1).

14. The method according to claim 10, further comprising:
acquiring traffic light information from a traffic light device; and
forwarding the traffic light information to the target vehicle (1).

15. A non-transitory computer readable storage medium having stored thereon a computer program that, when executed by a processor, causes the method for controlling a vehicle according to any one of claims 10-14 to be implemented.
